# EUROPEAN PATENT APPLICATION

(11) **EP 4 498 061 A1**
(43) Date of publication of application: **29.01.2025**
(21) Application number: 24191273.2
(22) Date of filing: 26.07.2024
(51) Int. Cl.: G01N 3/02, G01N 3/06, G01N 3/08

(54) **TEST METHOD CREATION AND OPTIMIZATION IN MATERIAL TESTING SYSTEMS**

(30) Priority: 28.07.2023 US 202363529504 P; 22.07.2024 US 202418779322
(71) Applicant: Illinois Tool Works Inc., Glenview IL 60025 (US)
(72) Inventor: CAESAR, Daniel Vincent, Glenview, 60025 (US); NICOL, Scott, Glenview, 60025 (US); MORSE, Jason, Glenview, 60025 (US); POPE, Mary E., Glenview, 60025 (US)
(74) Representative: HGF

(57) **Abstract**

Described herein are examples of material testing systems having new and improved processes that allow users to quickly and easily set several parameters defining a test method in response to a single user input, rather than having to manually set each and every parameter through a workflow. The parameters may further be optimized to comply with certain standards, save time, and/or reduce the potential for error. As the inputs required from the user during the new and improved processes are far fewer (and/or simpler) than if the user were to manually set each parameter through a workflow, there is a substantial time saving, and a substantial simplification of the endeavor.

## Description

### TECHNICAL FIELD

The present disclosure generally relates to material testing systems and, more particularly, to test method creation and optimization in material testing systems.

### BACKGROUND

Material testing machines are used to test the properties (e.g., tensile/compressive strength) of various material specimens. The particular method of testing (a.k.a. test method) may vary from material specimen to material specimen. A computing device in communication with the material testing machine may guide a user through a workflow to setup, execute, and analyze the results of each test method.

Limitations and disadvantages of conventional and traditional approaches will become apparent to one of skill in the art, through comparison of such systems with the present disclosure as set forth in the remainder of the present application with reference to the drawings.

### BRIEF SUMMARY

The present disclosure is directed to test method creation and optimization in material testing systems, substantially as illustrated by and/or described in connection with at least one of the figures, and as set forth more completely in the claims.

These and other advantages, aspects and novel features of the present disclosure, as well as details of an illustrated example thereof, will be more fully understood from the following description and drawings.

### BRIEF DESCRIPTION OF THE DRAWINGS

FIG. 1 shows an example material testing system, in accordance with aspects of this disclosure.
FIG. 2 shows a block diagram of the material testing system of FIG. 1, in accordance with aspects of this disclosure.
FIG. 3 shows a flow diagram illustrating an example material testing workflow of the material testing system of FIGS. 1-2, in accordance with aspects of this disclosure.
FIG. 4 shows a flow diagram illustrating an example test method creation process of the material testing system of FIGS. 1-2, in accordance with aspects of this disclosure.
FIGS. 5a-5f show examples of visual output of a user interface of the material testing system of FIGS. 1-2 during the material testing workflow of FIG. 3, in accordance with aspects of this disclosure.
FIGS. 6a-6b show examples of visual output of the user interface of the material testing system of FIGS. 1-2 during the test method creation process of FIG. 4, in accordance with aspects of this disclosure.

The figures are not necessarily to scale. Where appropriate, the same or similar reference numerals are used in the figures to refer to similar or identical elements. For example, reference numerals utilizing lettering (e.g., grip 124a, grip 124b) refer to instances of the same reference numeral that does not have the lettering (e.g., grips 124).

### DETAILED DESCRIPTION

Material testing systems sometimes require an operator to enter, specify, and/or set several parameters through a material testing workflow. The parameters may be used to configure a test method for execution and/or analyze results of the test method. In some examples, there may be hundreds of parameters that need to be set through the material testing workflow to complete configuration of the test method. Manual entry of each parameter can be both difficult and time consuming. Further, a user may not fully understand the impact of certain parameters.

The disclosed example material testing systems use a series of relatively short simple prompts to elicit user input regarding a user's testing intentions, desires, targets, and/or specimens. The user input(s) may then be used to determine the appropriate parameters to configure the test method. In some examples, the number of prompted user inputs may be far fewer than the number of parameters, such that a single user input may serve as the basis for setting several different parameters. Various analyses may also be used optimize the parameters to comply with certain standards, save time, and/or reduce the potential for error. As the number of prompts for user input is fewer than the number of parameters (and/or simpler to understand), the process of configuring the test method (and/or test result analysis) may be greatly shortened and/or simplified.

Some examples of the present disclosure relate to a material testing system, comprising: a material testing machine, comprising a test sensor, a test actuator, and a test controller configured to control the test actuator; a user interface configured to: output input prompts regarding (i) a sample specimen, (ii) a test method for testing the sample specimen using the material testing machine, or (iii) a result analysis of a test result of the test method, and receive one or more user inputs responding to the input prompts; and a computing device configured for communication with the user interface and the material testing machine, the computing device comprising processing circuitry configured to: identify one or more test parameters of the test method, one or more specimen parameters of the sample specimen, or one or more analysis parameters of the result analysis based on the one or more user inputs, and generate the test method, or a test method workflow, based on the one or more test, specimen, or analysis parameters, the test method workflow being configured to guide the user through setup or execution of (a) the test method or (b) the result analysis.

In some examples, the processing circuitry of the computing device is further configured to: generate a document that provides instructions on how to use the test method workflow, or how to setup, execute, or analyze the test result of the test method, based on the one or more user inputs, or the one or more test, specimen, or analysis parameters. In some examples, the user interface is further configured to output one or more suggested user inputs, or one or more suggested parameters, the processing circuitry being configured to identify the one or more suggested user inputs, or the one or more suggested parameters, based on an analysis of one or more prior user inputs, or one or more prior parameters. In some examples, the processing circuitry is further configured to: identify one or more additional parameters based on one or more prior test result of one or more prior test methods, wherein the test method, or the test method workflow, is generated using the one or more additional test parameters and the one or more test, specimen, or analysis parameters.

In some examples, the processing circuitry is further configured to communicate with the controller of the material testing machine to execute the test method on the sample specimen using the material testing machine. In some examples, the computing device further comprises communication circuitry in communication with a network, the processing circuitry being further configured to: compile the test result of the test method; and provide the test result over the network to a network accessible interface, via the communication circuitry. In some examples, the user interface is further configured to output a tutorial instructing, or providing access to a human or automated helper to provide guidance on, how to setup the material testing machine, operate the material testing machine, progress through the test method workflow, setup the test method, execute the test method, or perform the result analysis of the test result of the test method.

In some examples, the processing circuitry is further configured to: determine whether a change of a parameter, of the one or more test, specimen, or analysis parameters, would benefit the test method, or the test method workflow, and in response to determining the change of the parameter would benefit the test method, or the test method workflow, suggest the change of the parameter via the user interface, or implement the change of the parameter. In some examples, determining whether the change of the parameter would benefit the test method, or the test method workflow, comprises determining whether the change of the parameter would save time or reduce a potential for error. In some examples, determining whether the change of the parameter would benefit the test method, or the test method workflow, comprises determining whether the test method, the test method workflow, or each of the one or more test, specimen, or analysis parameters complies with a particular standard, the change of the parameter benefiting the test method, or the test method workflow, if the test method, the test method workflow, or each of the one or more test, specimen, or analysis parameters does not comply with the standard, the processing circuitry being further configured to identify the standard based on the one or more user inputs or the one or more test, specimen, or analysis parameters.

Some examples of the present disclosure relate to a method, comprising: outputting, via a user interface, input prompts regarding (i) a sample specimen, (ii) a test method for testing the sample specimen using a material testing machine, or (iii) a result analysis of a test result of the test method; receiving, via the user interface one or more user inputs responding to the input prompts; identifying, via processing circuitry of a computing device in communication with the user interface and material testing machine, one or more test parameters of the test method, one or more specimen parameters of the sample specimen, or one or more analysis parameters of the result analysis based on the one or more user inputs; and generating, via the processing circuitry, the test method, or a test method workflow, based on the one or more test, specimen, or analysis parameters, the test method workflow being configured to guide the user through setup or execution of (a) the test method or (b) the result analysis.

In some examples, the method further comprises generating, via the processing circuitry, a document that provides instructions on how to use the test method workflow, or how to setup, execute, or analyze the test result of the test method, based on the one or more user inputs, or the one or more test, specimen, or analysis parameters. In some examples, the method further comprises identifying, via the processing circuitry, one or more suggested user inputs, or one or more suggested parameters, based on an analysis of one or more prior user inputs, or one or more prior parameters; and outputting, via the user interface, the one or more suggested user inputs, or the one or more suggested parameters. In some examples, the method further comprises identifying one or more additional parameters based on one or more prior test result of one or more prior test methods, wherein the test method, or the test method workflow, is generated using the one or more additional test parameters and the one or more test, specimen, or analysis parameters.

In some examples, the method further comprises communicating between the processing circuitry of the computing device and the controller of the material testing machine to execute the test method on the sample specimen using the material testing machine. In some examples, the method further comprises compiling the test results of the test method via the processing circuitry of the computing device; and providing the test result over a network to a network accessible interface via communication circuitry of the computing device. In some examples, the method further comprises outputting, via the user interface, a tutorial instructing, or providing access to a human or automated helper to provide guidance on, how to setup the material testing machine, operate the material testing machine, progress through the test method workflow, setup the test method, execute the test method, or perform the result analysis of the test result of the test method.

In some examples, the method further comprises determining, via the processing circuitry, whether a change of a parameter, of the one or more test, specimen, or analysis parameters, would benefit the test method, or the test method workflow, and in response to determining the change of the parameter would benefit the test method, or the test method workflow, suggesting the change of the parameter via the user interface, or implementing the change of the parameter via the processing circuitry. In some examples, determining whether the change of the parameter would benefit the test method, or the test method workflow, comprises determining whether the change of the parameter would save time or reduce a potential for error. In some examples, determining whether the change of the parameter would benefit the test method, or the test method workflow, comprises determining whether the test method, the test method workflow, or each of the one or more test, specimen, or analysis parameters complies with a particular standard, the change of the parameter benefiting the test method, or the test method workflow, if the test method, the test method workflow, or each of the one or more test, specimen, or analysis parameters does not comply with the standard, the processing circuitry being further configured to identify the standard based on the one or more user inputs or the one or more test, specimen, or analysis parameters.

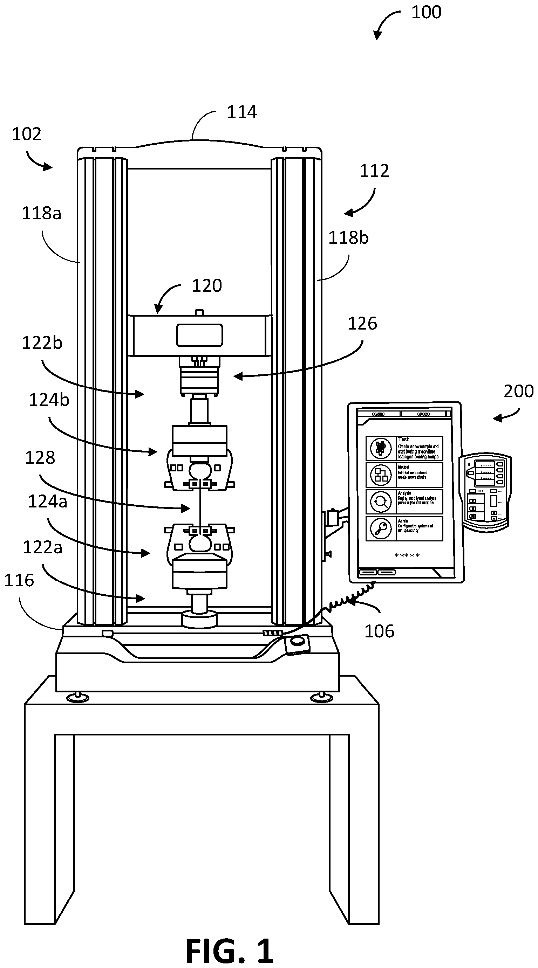

FIG. 1 shows an example material testing system 100. As shown, the material testing system 100 includes a material testing machine 102 (also known as a universal testing machine), and a computing system 200 connected to the material testing machine 102 through cable 106. While shown as being physically connected, in some examples, the connections may be wireless rather than wired.

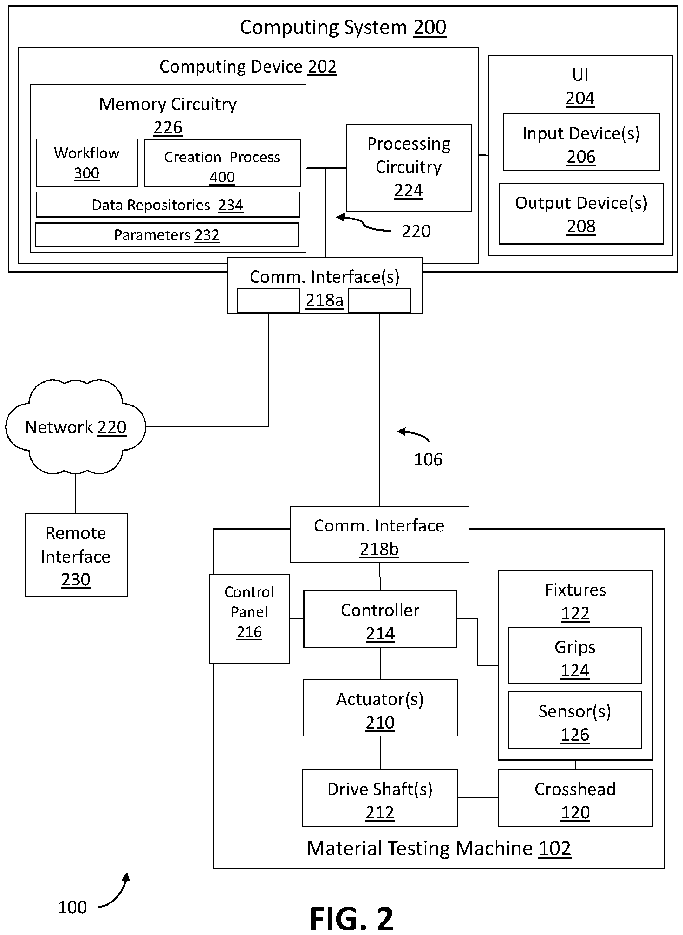

In the example of FIG. 1, the material testing machine 102 includes a frame 112. In some examples, the frame 112 provides rigid structural support for the other components of the material testing machine 102. As shown, the frame 112 comprises a top plate 114 and a bottom base 116 connected by two columns 118. In some examples, the columns 118 of the frame 112 may house guide rails and/or drive shafts 212 of the material testing machine 102 (see, e.g., FIG. 2).

In the example of FIG. 1, a movable crosshead 120 extends between the columns 118. In some examples, the movable crosshead 120 may be connected to the guide rails and/or drive shafts 212 housed in the columns 118, and/or configured to move toward and/or away from the base 116 through (e.g., motorized) actuation of the drive shaft(s) 212. While one movable crosshead 120 is shown in the example of FIG. 1, in some examples, the material testing machine 102 may have multiple movable crossheads 120, and/or other movable members.

In the example of FIG. 1, a fixture 122 is attached to the bottom base 116 of the frame 112, as well as to the movable crosshead 120. As shown, the lower fixture 122a includes a grip 124a, while the upper fixture 122b includes both a test sensor 126 and a grip 124b. While one test sensor 126 and two grips 124 are shown in the example of FIG. 1, in some examples, the testing machine 102 may include more or fewer test sensors 126 and/or grips 124.

In the example of FIG. 1, the grips 124 are holding a test specimen 128. While shown as a (e.g., steel) rope, in some examples, the test specimen 128 may be some other type of material and/or component. While shown as being rope holders, in some examples, the grip 124a and/or grip 124b may alternatively, or additionally, be configured as a bolt holder, wedge grip, side acting grip, manual grip, roller grip, capstan grip, and/or syringe holder. In some examples, one or both of the grips 124 may be replaced by a compression platen configured to compress the test specimen 128.

In the example of FIG. 1, the test sensor 126 is connected to the grip 124, such that the test sensor 126 can measure forces acting on the grip 124 (and/or specimen 128, crosshead 120, etc.). In some examples, the test sensor 126 may be a load cell. In some examples, the test sensor 126 may be some other type of sensor.

In some examples, the material testing machine 102 may be configured for static mechanical testing. For example, the material testing machine 102 may be configured for compression strength testing, tension strength testing, shear strength testing, bend strength testing, deflection strength testing, tearing strength testing, peel strength testing (e.g., strength of an adhesive bond), torsional strength testing, and/or any other compressive and/or tensile testing. Additionally or alternatively, the material testing machine 102 may be configured to perform dynamic testing.

In some examples, the material testing machine 102 is configured to interface with the computing system 200 to conduct a test method. For example, the computing system 200 may communicate with a controller 214 (see, e.g., FIG. 2) of the material testing machine 102 to conduct the test method. In some examples, an operator (or other user) may first use the computing system 200 to setup the test method, then use the computing system 200 to execute the test method, and finally use the computing system 200 to analyze the results of the test method.

FIG. 2 is a block diagram showing details of the computing system 200, as well as additional details of the material testing machine 102. In the example of FIG. 2, the example material testing machine 102 includes one or more actuators 210 connected with one or more drive shafts 212. In some examples, the actuators 210 may be used to provide force to, and/or induce motion of, the drive shafts 212. In some examples, the actuators 210 may include electric motors, pneumatic actuators, hydraulic actuators, piezoelectric actuators, relays, and/or switches.

The drive shafts 212 are further shown connected to the movable crosshead 120, such that movement of the drive shaft(s) 212 via the actuator(s) 210 will result in movement of the movable crosshead 120. While termed drive shafts 212 in the example of FIG. 2, in some examples, the drive shafts 212 may be some other mechanical means of moving the movable crosshead 120 though inducement by the actuator(s) 210.

The example material testing machine 102 further includes a controller 214 in electrical communication with the actuator(s) 210. In some examples, the controller 214 may include processing circuitry and/or memory circuitry. In some examples, the controller 214 may be configured to control the material testing machine 102 based on one or more commands, control inputs, and/or test parameters. In some examples, the controller 214 may be configured to translate commands, control inputs, and/or test parameters (e.g., received from the computing system 200) to appropriate (e.g., electrical) signals that may be delivered to the actuator(s) 210, thereby controlling operation of the material testing machine 102 (e.g., via the actuator(s) 210). For example, the controller 214 may provide one or more signals(s) commanding more or less electrical power be provided to the actuator(s) 210, to thereby increase or decrease applied force.

In the example of FIG. 2, the controller 214 is further in electrical communication with the fixtures 122 (e.g., the grips 124 and test sensor(s) 126). In some examples, the controller 214 may be configured to translate commands, control inputs, and/or test parameters (e.g., received from the computing system 200) to appropriate (e.g., electrical) signals that may be delivered to the grips 124, to thereby control (e.g., grip or release) operation of the grips 124. In some examples, the controller 214 may be configured to translate commands, control inputs, and/or parameters (e.g., received from the computing system 200) to appropriate (e.g., electrical) signals that may be delivered to the sensor(s) 126, to thereby control operation of the sensor(s) 126. In some examples, the controller 214 may be configured to translate measurement data received from the sensor(s) 126, and/or send measurement data to the computing system 200.

The example controller 214 is further in electrical communication with a control panel 216 of the material testing machine 102. In some examples, the control panel 216 may include one or more input devices (e.g., buttons, switches, slides, knobs, microphones, dials, and/or other electromechanical input devices). In some examples, the control panel 216 may be used by an operator to directly control the material testing machine 102. In some examples, the controller 214 may be configured to translate commands, control inputs, and/or test parameters received via the control panel 216 to appropriate (e.g., electrical) signals that may be delivered to the actuator(s) 210 and/or grip(s) 124 to control the material testing machine 102.

The controller 214 is also shown in electrical communication with a network interface 218b of the material testing machine 102. In some examples, the network interface 218b includes hardware, firmware, and/or software to connect the material testing machine 102 to a complementary network interface 218a of the computing system 200. In some examples, the controller 214 may receive information (e.g., commands) from the computing system 200 through the network interfaces 218, and/or send information (e.g., measurement data from sensor(s) 126) to the computing system 200 through the network interfaces 218.

In the example of FIG. 2, the computing system 200 includes a computing device 202 and a user interface (UI) 204 interconnected with one another. As shown, the UI 204 may include one or more input devices 206 configured to receive inputs from a user, and one or more output devices 208 configured to provide outputs to the user.

In some examples, the one or more input devices 206 may comprise one or more touch screens, mice, keyboards, buttons, switches, slides, knobs, microphones, dials, and/or other input devices 206. In some examples, the one or more output devices 208 may comprise one or more display/touch screens, speakers, lights, haptic devices, and/or other output devices 208. In some examples, the output device(s) 208 (e.g., a display screen) of the UI 204 may output one or more representations of a material testing workflow 300 configured to guide a user through setup, execution, and/or analysis of a test method conducted by the material testing machine 102. In some examples, the output device(s) 208 (e.g., a display screen) of the UI 204 may output one or more representations of a test method creation process 400 configured to assist a user in easily and/or quickly generating a test method and/or material testing workflow 300.

In the example of FIG. 2, the example computing device 202 includes network interfaces 218a. As shown, one network interface 218a is in communication with the network interface 218b of the material testing machine 102 through cable 106. As shown, the computing device 102 further includes a network interface 218a in communication with a network 220 (e.g., the Internet). In the example of FIG. 2, the computing device 202 is in communication with a remote interface 230 through the network 220 and network interface 218a. As shown, the network interfaces 218a are electrically connected to a common electrical bus 220 of the computing device 202.

The computing device 202 further includes processing circuitry 224 connected to the common electrical bus 220. In some examples, the processing circuitry 224 may comprise one or more processors. In some examples, the processing circuitry 224 is configured to process information received from the UI 204, data importation device(s) 108, and/or material testing machine 102. In some examples, the processing circuitry 224 is configured to transmit (e.g., via network interface(s) 218a) commands and/or test parameters to the material testing machine 102. In some examples, the processing circuitry 224 is configured to output information to an operator through the UI 204. In some examples, the processing circuitry 224 is configured to execute machine readable instructions stored in memory circuitry 226.

The example computing device 202 further includes memory circuitry 226 connected to the common electrical bus 220. As shown, the memory circuitry 226 includes a material testing workflow 300, several workflow parameters 232 (and/or parameter values), a test method creation process 400, and one or more data repositories 234.

In some examples, the data repositories 234 may comprise several different data structures (e.g., databases, look up table, etc.). The data repositories 234 may store both historical data (e.g., prior workflows 300, test methods, parameters 232, test results, reports, prompts 602, user inputs, etc.) and current data (e.g., mappings between user inputs and parameters 232). In some examples, the historical data may be associated with timestamps and/or other data (e.g., with similar timestamps). Though shown as part of the memory circuitry 226 of the computing device 202 in the example of FIG. 2, in some examples, the repositories 234 may be separate from the computing device 202, and/or in communication with the computing device 202 (e.g., via a network interface 218a).

While shown as part of the memory circuitry 226 in the example of FIG. 2, in some examples, the material testing workflow 300 and/or test method creation process 400 may be implemented using discrete circuitry (e.g., of the processing circuitry 224). In some examples, the material testing workflow 300 and/or test method creation process 400 are implemented using non-transitory machine readable instructions stored in the memory circuitry 226.

In some examples, the processing circuitry 224 is configured to execute the machine readable instructions of the material testing workflow 300 to guide a user through setup, execution, and/or analysis of a test method of the material testing machine 102. In some examples, the setup (and/or creation) of the test method may involve setting values for several (e.g., test, sample, analysis, etc.) parameters 232 that define the test method and/or analysis of the tests results. In some examples, the UI 204 is configured to show (and/or otherwise output) one or more workflow screens 500 that show and/or allow a user to manually set parameters 232 during execution of the material testing workflow 300.

In some examples, during the test method creation process 400, the computing device 202 is configured to receive input from a user (e.g., via the UI 204), and use the input to generate and/or set the (e.g., test, sample, analysis, etc.) parameters 232 that define, setup, and/or create the test method. In some examples, the number of prompted user inputs may be far fewer than the number of parameters 232, and/or a single user input may serve as the basis for setting several different parameters 232. Various analyses may also be used optimize the parameters 232 to comply with certain standards, save time, and/or reduce the potential for error. As the number of user input prompts is far fewer than the number of parameters 232, the process of configuring the test method (and/or test result analysis) may be greatly shortened and/or simplified as compared to manual configuration using the material testing workflow 300.

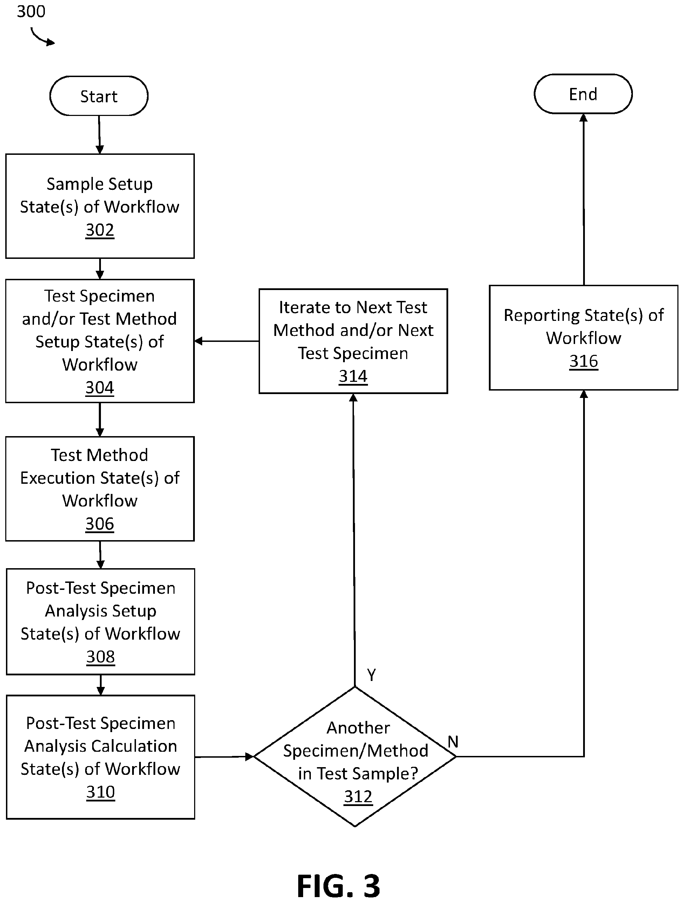

FIG. 3 is a flow diagram showing example workflow states of an example material testing workflow 300. While a specific order of workflow states are shown, in some examples, user progression through the material testing workflow 300 may be customizable such that additional and/or fewer workflow states may be implemented in operation. Additionally, numerous alternative progressions through a workflow 300 may be possible.

In some examples, before using and/or progressing through the material testing workflow 300, a user may be required to login and/or be authenticated. In some examples, user authentication may occur via biometric (e.g., fingerprint, retinal, face, etc.), close proximity communication (e.g., RFID, NFC, Bluetooth, barcode etc.), cloud based (e.g., Oauth, Google, Single sign on), passkey, and/or multi-factor authentication.

While the material testing workflow 300 is sometimes described below as conducting certain actions for the sake of understanding, it should be understood that one or more of the above described components of the material testing system 100 (e.g., the processing circuitry 224, UI 204, etc.) may undertake the actions on behalf (and/or according to instructions) of the material testing workflow 300.

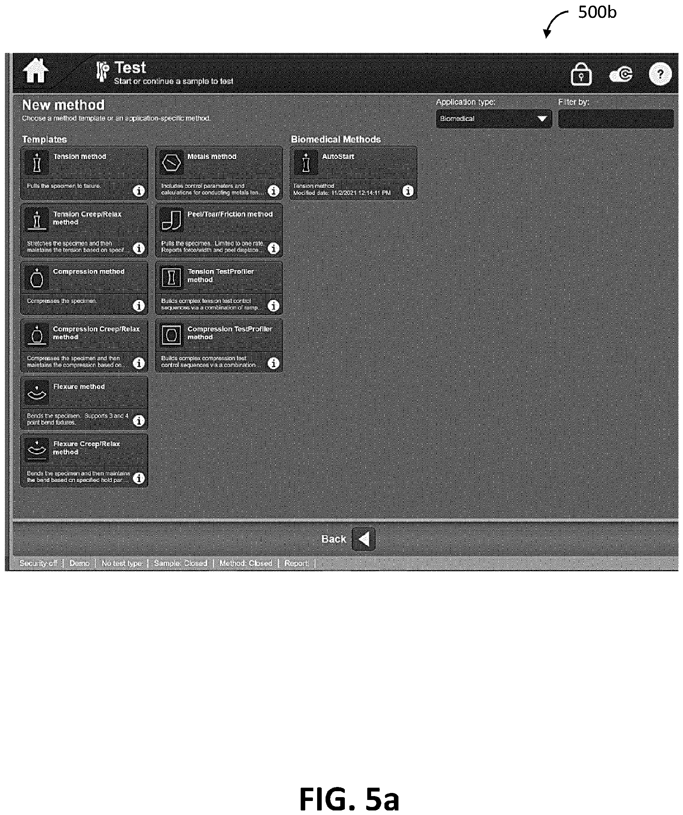

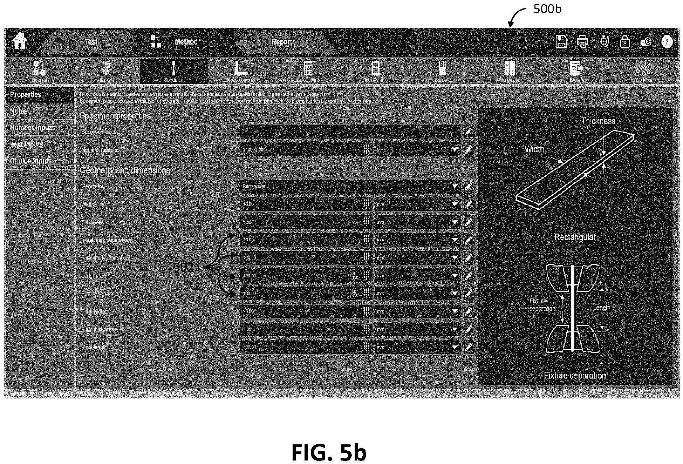

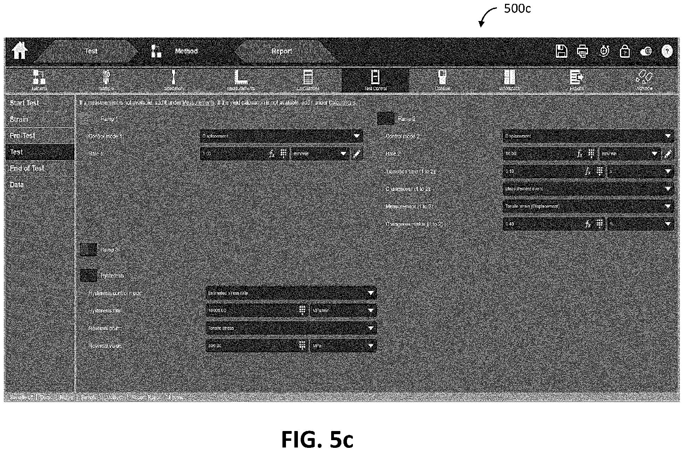

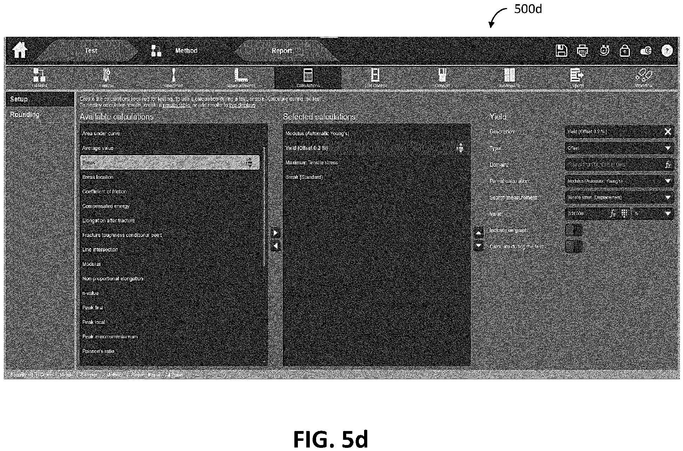

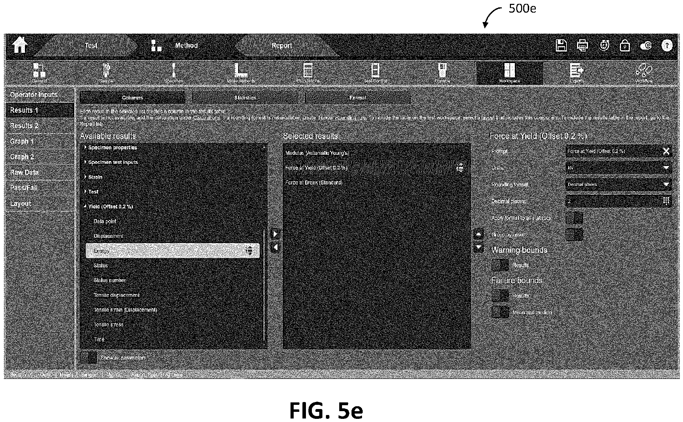

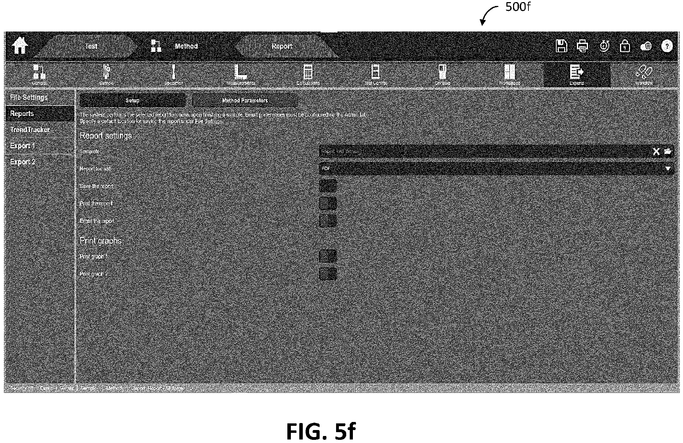

In some examples, the material testing workflow 300 progresses through the workflow states to guide a user through setup, execution, and analysis of a test method of the material testing machine 102. In some examples, a particular workflow state may be associated with an output of the UI 204 (e.g., a workflow screen 500, see FIG. 5). Some of the preliminary workflow states may also be associated with one or more parameters 232 (e.g., shown and/or set via the workflow screens 500). In some examples, the parameter(s) 232 may be used to define and/or execute the test method, and/or analyze results of the test method.

In the example of FIG. 3, the first workflow state is a sample setup state 302 (and/or a plurality of sample setup states 302). During the example sample setup state(s) 302, the material testing workflow 300 prompts an operator for sample parameters 232 comprising information pertaining to a set of specimens 128 of a sample, as well as (e.g., universal) test parameters 232 comprising information pertaining a set of test methods that will be used to test the specimens 128 of the sample. The information prompted for (and/or collected) during the sample setup state(s) 302 may be information that is applicable to all the specimens 128 and test methods, such as, for example, a date the test(s) will be run, a date the specimens 128 were manufactured/shipped/packaged, identification information (e.g., number, name, etc.) of the operator, identification information (e.g., number(s), name(s), etc.) of the fixture(s), and/or other information relevant to all the tests of all the specimens 128.

In the example of FIG. 3, the sample setup state 302 is followed by one or more test specimen and/or test method setup states 304. During the test specimen and/or test method setup state(s) 304, the material testing workflow 300 prompts an operator for (and/or collects) specimen parameters 232 comprising information pertaining to a particular specimen 128 of a sample, and/or test parameters 232 comprising information pertaining a particular test method that will be used to test the particular specimen 128.

For example, the test parameters 232 may include a date the test will be run, identification information of the test (e.g., number, name, type, description, etc.), target start/end positions of grip(s) 124, target start/end positions of the crosshead 120, target distance/direction moved by crosshead 120, target speed of movement of crosshead 120, expected result(s) of test (e.g., position/type of break, distance moved before break, force applied before break, post-test characteristics of sample, etc.), time(s) when sensor(s) 126 should take measurement(s), and/or other relevant to a particular test method. As another example, specimen parameters 232 may include, a date the specimen 128 was manufactured/shipped/packaged, identification information of the specimen 128 (e.g., number, name, description, etc.), pre-test characteristics of the specimen 128 (e.g., measurements/dimensions, material type, weight, color, shape, modulus, ultimate tensile strength, etc.), and/or other information relevant to a particular specimen.

FIGS. 5a-5c show example workflow screens 500a-c that might be presented via the UI 204 during the test specimen and/or test method setup state(s) 304. In the example of FIG. 5a, the workflow screen 500a presents several different types of test methods that may be selected. The example workflow screen 500b in FIG. 5b presents several different specimen parameters 232 that may be specified. FIG. 5c shows an example workflow screen 500c showing several test parameters 232 that may be specified.

The workflow screens 500a-c have several input fields 502 where (e.g., specimen/test parameter 232) information may be shown and/or entered. And indeed, several of the input fields 502 already have information entered therein. In some examples, each input field 502 may correspond to a sample parameter 232 and/or test parameter 232, and the information present therein being used to set the sample parameter 232 and/or test parameter 232.

In the example of FIG. 3, the test specimen and/or test method setup state 304 is followed by a test method execution state 306 (and/or test method execution states 306). During the test method execution state(s) 306, the computing device 202 communicates with the material testing machine 102 (e.g., via network interfaces 218) to execute the test method on the test specimen 128. In some examples, execution of the test method may involve using the material testing machine 102 according to the (e.g., test/specimen/sample) parameters 232 set during the test specimen and/or test method setup state(s) 304 and/or sample setup state(s) 302. For example, the processing circuitry 224 of the computing device 202 may determine and/or send one or more parameters 232 and/or commands to the material testing machine 102, and the controller 214 of the material testing machine 102 may control the actuator(s) 210 of the material testing machine 102 to execute the test method in accordance with the command(s) and/or parameter(s) 232. In some examples, execution of the test method (e.g., via the test method execution state(s) 306) may result in some movement and/or operation of the material testing machine 102, some force applied to the specimen 128, and/or some (e.g., force) measurement(s) of the test sensor(s) 126 over some time period.

In the example of FIG. 3, the test method execution state 306 is followed by one or more post-test analysis setup states 308. During the post-test analysis setup state(s) 308, the material testing workflow 300 prompts an operator for (and/or collects) information pertaining to an analysis of the test method that was executed during the test method execution state 306, and/or one or more reports of that analysis.

For example, the information prompted for (and/or collected) during the post-test specimen analysis setup state(s) 308 may include post-test characteristics of the specimen 128 (e.g., specimen parameters 232), actual parameters of the test (e.g., test parameters 232), actual results of the test (e.g., test parameters 232), test result report format(s) (e.g., report parameters 232) and/or other information relevant to an analysis of the test method and/or test sample. As another example, the information prompted for (and/or collected) during the post-test specimen analysis setup state(s) 308 may include calculation analysis parameters 232, such, for example, as one or more algorithms that may be used to evaluate results of the test method (and/or produce additional test results), and/or one or more thresholds and/or threshold ranges (e.g., by which test results may be adjudged to determine whether the specimen 128 passed or failed the test). While shown as a separate state in FIG. 3, in some examples, the post-test specimen analysis setup state(s) 308 may be integrated into the test specimen and/or test method setup state(s) 304.

FIGS. 5d-5f show workflow screens 500d-f that might be presented via the UI 204 during the post-test specimen analysis setup state(s) 308. The example workflow screens 500d and 500e in FIGS. 5d and 5e shows various calculation analysis parameters 232 that might be set during the post-test specimen analysis setup state(s) 308. FIG. 5f shows an example workflow screen 500f with various report parameters 232 that might be set to configure a report during the post-test specimen analysis setup state(s) 308.

In the example of FIG. 3, the one or more post-test specimen analysis setup states 308 are followed by one or more post-test specimen analysis calculation states 310 of the material testing workflow 300. During the post-test specimen analysis calculation state(s) 310, the processing circuitry 224 of the computing device 202 may perform one or more calculations based on the information collected during the previous post-test specimen analysis setup state(s) 308 (e.g., the calculation analysis parameters 232), as well as the results of the test method. In some examples, the results of the test method may include measurements of force and/or load exerted on a specimen 128 (and/or measured by the test sensor 126) over a period of time (e.g., of the test method). In some examples, during the post-test specimen analysis calculation state(s) 310, the processing circuitry 224 of the computing device 202 may additionally (or alternatively) perform one or more calculations based on information about the specimen and/or test method (e.g., sample/specimen/test parameters 232).

For example, the processing circuitry 224 may estimate a strength, reliability, quality, grade, resiliency, and/or other characteristic of the specimen 128 using the test results and/r the sample, specimen, test, and/or calculation analysis parameters 232. As another example, the processing circuitry 224 may hypothesize about the structure and/or composition of the specimen 128 using the test results and/or the sample, specimen, test, and/or calculation analysis parameters 232. As another example, the processing circuitry may hypothesize about the future performance of the specimen 128 using the test results and/or the sample, specimen, test, and/or calculation analysis parameters 232.

In the example of FIG. 3, the material testing workflow 300 repeats states 304-310 for all the test methods and/or test specimens of the test sample (setup at state 302). As shown, after state 310, the material testing workflow 300 iterates to the next test method and/or test specimen at state 314 (provided there is another test method or test specimen), then returns to state 304. Once states 304-310 have been completed for all the test methods and/or test specimens of the test sample, the material testing workflow 300 moves through one or more reporting state(s) 316, where the material testing workflow 300 may provide reports on the results and/or analysis of the test sample according to operator specifications. In some examples, one or more reports may be provided over the network 220 to the remote interface 230.

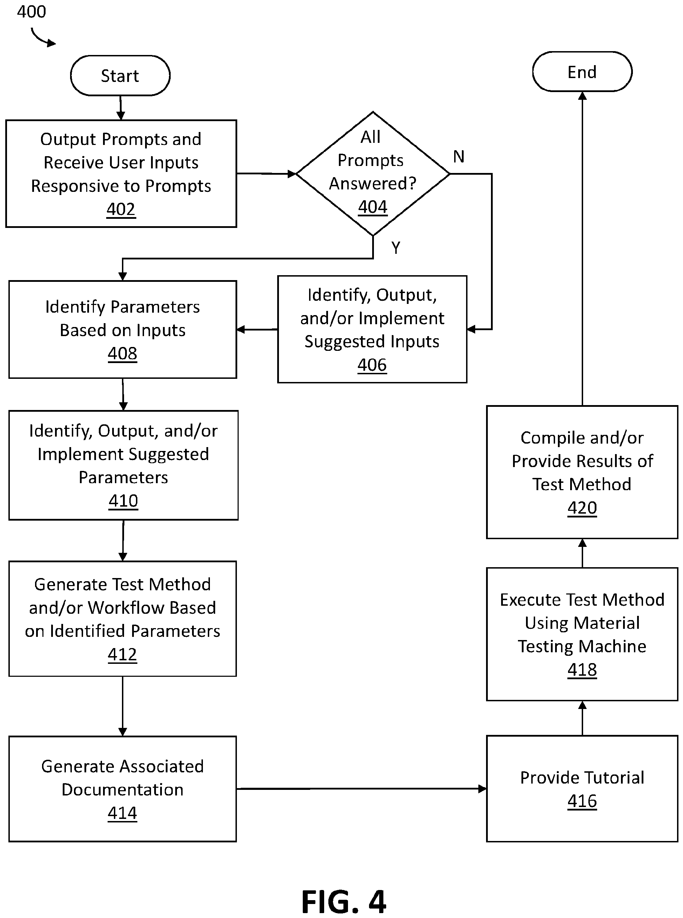

FIG. 4 is a flow diagram showing example operation of the test method creation process 400. In some examples, during the test method creation process 400, the computing device 202 is configured to receive user input (e.g., via the UI 204), and use the user input to generate and/or set the (e.g., test, sample, analysis, etc.) parameters 232 that would otherwise be set through the material testing workflow 300. In some examples, before using and/or progressing through the test method creation process 400, a user may be required to login and/or be authenticated, as discussed above. While the test method creation process 400 is sometimes described below as conducting certain actions for the sake of understanding, it should be understood that one or more of the above described components of the material testing system 100 (e.g., the processing circuitry 224, UI 204, etc.) may undertake the actions on behalf (and/or according to instructions) of the test method creation process 400.

In the example of FIG. 4, the test method creation process 400 begins at block 402, where the test method creation process 400 outputs (e.g., via the UI 204) one or more questions and/or other prompts to elicit input from an operator and/or other user. In some examples, the questions and/or other prompts may be seek to obtain input regarding a user's testing intentions, desires, targets, and/or specimens that can be translated into parameters 232 defining a test method and/or test result analysis. As shown, at block 402, the test method creation process 400 also receives the user inputs the prompt(s) sought to elicit.

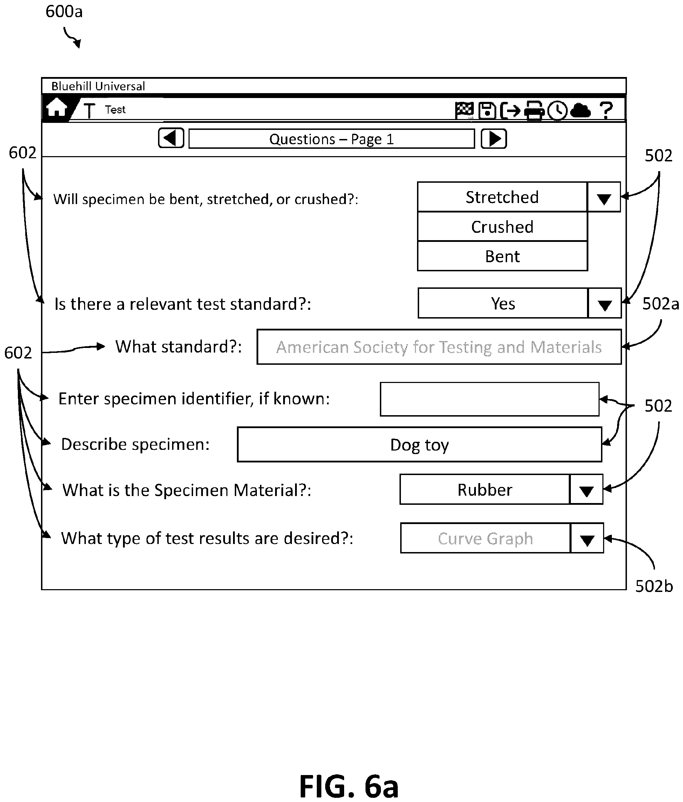

FIGS. 6a-6b show examples of creation screens 600 that might be shown during block 402 (and/or other blocks) of the test method creation process 400. In the example of FIGS. 6a-6b, the creation screens 600 include several prompts 602, each of which is adjacent an input field 502. As shown, some of the input fields 502 comprise dropdown menus with several options from which to choose, while other input fields 502 allow for free form text entry. While most of the input fields 502 have some information entered, at least one input field 502 remains empty.

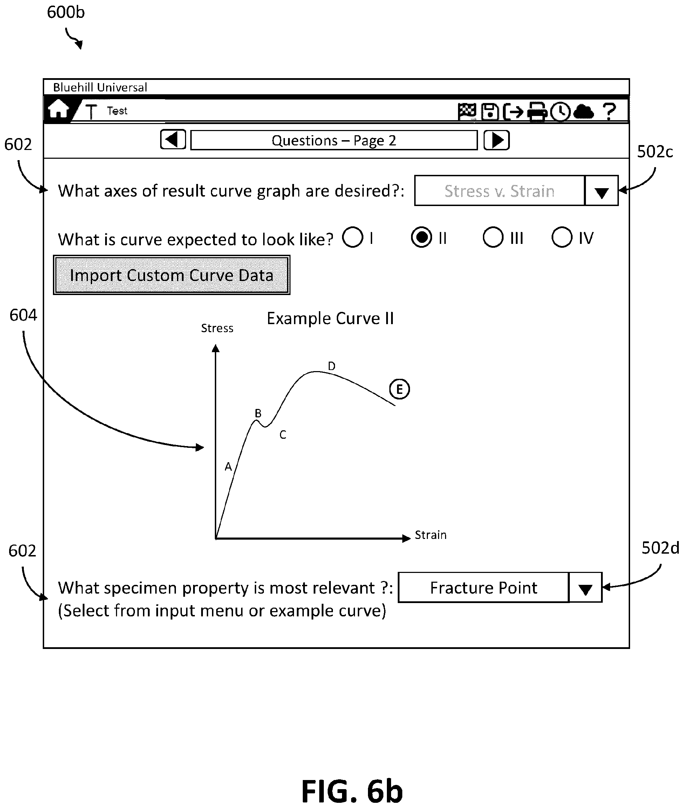

The example workflow screen 600b in FIG. 6b further shows an example result curve graph 604 that may additionally be used to accept input from a user (e.g., via cursor). For example, the user may interact with the graph 604 to select a particular portion (e.g., A, B, C, D, or E). In some examples, selection of a particular portion of the result curve graph 604 may select a particular option from an input field 502. In the example of FIG. 6b, the user has selected the E portion of the result curve graph 604, resulting in selection of "Fracture Point" in response to the prompt 602 regarding most relevant property of the specimen 128 (e.g., as opposed to resilience, yield strength, ultimate strength, etc.). In some examples, different selections (e.g., via graph 604 or input field 502d) regarding most relevant property of the specimen 128 may result in different calculation analysis parameters 232 being selected by the test method creation process 400.

In the example of FIG. 4, the test method creation process 400 determines whether any input fields 502 from block 402 remain empty and/or unset at block 404 (e.g., after an indication is received indicating the use has finished entering information). If there remain empty and/or unset input fields 502, the test method creation process 400 identifies one or more suggested inputs to the empty input fields 502 at block 5406.

In some examples, the identification of suggested inputs may involve an analysis of prior inputs (e.g., stored in the data repositories 234) to identify the most recent and/or most used input(s) for a particular (e.g., empty) input field 502. In some examples, the test method creation process 400 may additionally (or alternatively) consider other factors, such as, for example, the logged in user, and/or the material testing machine 102 being used (e.g., to determine the most recent/used input for a particular user and/or machine 102). For example, a particular material testing machine 102 (and/or fixture 122, grip 124, sensor 126, etc.) may always be used for compression, in which case the test method creation process 400 may suggest "crushed" in answer to the question "will the specimen be bent, stretched, or crushed." In some examples, the test method creation process 400 may additionally consider other prior inputs (e.g., to determine the most recent/used input when a particular pattern of inputs is present).

In some examples, a more complex analysis may be used, where the test method creation process 400 attempts to identify, using prior input data (e.g., stored in the repositories 234), one or more input patterns that match the current pattern of inputs. In some examples, one or more machine learning algorithms (e.g., cluster analysis, K-nearest neighbor, etc.) may be used for the pattern matching. This pattern matching may then be used to identify an input to suggest.

In some examples, the suggested input identified at block 406 may be output to the user via the UI 204. In some examples, the test method creation process 400 may give an explanation as to why the suggestion is being made. In some examples, the suggested input may be implemented and/or used as the actual input (e.g., in response to an input received via the UI 204 accepting the suggestion). While block 406 is described as occurring after user input is completed at block 402, in some examples, the suggestion(s) of block 406 may occur while a user is entering input, so that the user can see suggested inputs prior to actually choosing an input themselves.

FIGS. 6a-6b, for example, shows examples of suggested inputs being presented on the creation screens 600. In the example of FIGS. 6a-6b, the suggested inputs are the gray inputs in the input fields 502a, 502b, and 502c. In some examples, multiple input suggestions may be made. For example, both the American Society for Testing and Materials (ASTM) and the International Organization for Standardization (ISO) may be suggested for input field 502a, with the user being allowed to choose one (or both) of the suggestions. In some examples, a single input suggestion may be made from several possible choices. For example, in the example of FIG. 6b, the input field 502c shows a suggestion of using stress and strain axes rather than other potential axes choices (e.g., load and displacement, load and time, etc.).

In the example of FIG. 4, after block 406, the test method creation process 400 proceeds to block 408, where the test method creation process 400 identifies one or more parameters 232 (and/or parameter values) of the material testing workflow 300 based on the input(s) received at blocks 402 and/or 406. In some examples, this identification may involve a translation of a single input into multiple parameters 232 (and/or parameter values), such that the all the parameters 232 may be set with fewer inputs than would be needed to set each parameter 232 individually. In some examples, the translation may use one or more data structures (e.g., of the data repositories 234) that map inputs to parameters 232. Such data structures may be particularly fruitful where there are a limited number of known inputs that might be entered in response to a particular prompt 602, and/or where dropdown menu input fields 502 are used (e.g., providing a limited number of known inputs as options). In some examples, if there are parameters 232 that cannot be directly mapped to inputs, the parameters 232 may be assigned default values (e.g., stored in memory circuitry 226) that are known to be broadly applicable in most situations.

If appropriate, after block 408, the test method creation process 400 identifies one or more parameters 232 (and/or parameter values) to be suggested to the user at block 410. In some examples, the parameter(s) 232 (and/or parameter value(s)) may be suggested if one or more parameters 232 (and/or parameter values) remain unidentified and/or unset after block 408. In some examples, a parameter 232 (and/or parameter value) may be suggested even if a parameter 232 (and/or parameter value) was set at block 408, if a suggested change in the parameter 232 (and/or parameter value) would save time, reduce the potential for error, and/or move the parameter 232 (and/or test method) into compliance with a particular standard.

In some examples, the test method creation process 400 identifies the suggested parameter(s) 232 based on one or more inputs received at blocks 402 and/or 406. For example, one of the user inputs at block 402 may identify a particular standard, and the test method creation process 400 may evaluate the parameters 232 in view of the standard and identify one or more parameters 232 that should be adjusted to meet the standard (e.g., in view of the material testing machine 102, other parameters 232, and/or other inputs).

In some examples, the test method creation process 400 identifies the suggested parameter(s) 232 based on one or more other present and/or prior parameters 232. For example, the test method creation process 400 may evaluate prior parameters 232 in view of a current specimen parameter 232 (e.g., indicating that the specimen 128 is a particular material), and identify one or more particular test parameters 232 as being most often/recently used in the past in conjunction with that specimen parameter 232.

In some examples, the test method creation process 400 may use a more complex analysis, where the test method creation process 400 attempts to identify, using prior parameters 232 and/or inputs (e.g., stored in the repositories 234), one or more patterns that match the current pattern of parameters 232 and/or inputs. In some examples, one or more machine learning algorithms (e.g., cluster analysis, K-nearest neighbor, etc.) may be used for the pattern matching. In some examples, the test method creation process 400 may additionally (or alternatively) identify the suggested parameter(s) 232 based on prior test results (e.g., stored in the repositories 234).

In some examples, the suggested parameter(s) 232 identified at block 410 may be output to the user via the UI 204. In some examples, the test method creation process 400 may give an explanation as to why the suggestion is being made. In some examples, the suggested parameter(s) 232 may be used as the actual parameter(s) 232 (e.g., in response to an input received via the UI 204 accepting the suggestion).

In the example of FIG. 4, after block 410, the test method creation process 400 proceeds to block 412, where the test method creation process 400 generates a material testing workflow 300 using the parameters 232 identified at blocks 410 and/or 408 (and/or the inputs received at blocks 402 and/or 406). In some examples, in generating the material testing workflow 300 using the parameters 232, the test method creation process 400 may define a test method.

After block 412, the test method creation process 400 generates one or more documents based on the received inputs, the current parameters 232 (and/or parameter values), and/or the generated material testing workflow 300 (and/or test method) at block 414. For example, the document(s) may provide instructions on how to use the material testing workflow 300, and/or how to setup, execute, and/or analyze results of the test method. Such a document may be useful for an operator tasked with using the generated material testing workflow 300, and/or setting up, executing, and/or analyzing results of the test method.

After block 414, the test method creation process 400 generates and/or provides a tutorial (e.g., via the UI 204) at block 416. In some examples, the tutorial may instruct a user how to setup the material testing machine 102, operate the material testing machine 102, progress through the material testing workflow 300, and/or setup, execute, and/or analyze the results of the test method (e.g., via the material testing workflow 300). In some examples, the tutorial may provide access to a human or automated helper to provide guidance on how to setup the material testing machine 102, operate the material testing machine 102, progress through the material testing workflow 300, and/or setup, execute, and/or analyze the results of the test method.

In the example of FIG. 4, after block 416, the test method creation process 400 proceeds to block 418 where the test method creation process 400 allows a user to use and/or progress through the generated material testing workflow 300. By allowing the user to progress through the workflow 300, the user is allowed to see and/or modify any desired parameters 232. For example, the user may use the test method creation process 400 to easily set values for many for the parameters 232, but be aware of a few parameters 232 that must be set a certain way to define the test method and/or analyze the test results as desired. In such an example, the user may manually customize the parameters 232 to the extent desired.

In some examples, block 418 may include executing the test method defined by the identified parameters 232 of the workflow 300 using (and/or via communication with) the material testing machine 102. For example, a user may use the test method execution state(s) 306 of the workflow 300 to execute the test method using the set parameters 232. Thereafter, at block 420, the results of the test method are compiled and/or output via one or more reports (e.g., via post-test states 308, 310, and/or 316 of the workflow 300).

In some examples, the report(s) may be provided over the network 220 (e.g., internet) to a remote user using the remote interface 230. In such examples, the report may take the form of a website, web platform, or other online interface.

While blocks 418 and 420 are shown as being part of the test method creation process 400 for the purposes of completeness and understanding, persons of ordinary skill will understand that blocks 418 and 420 may be undertaken outside of the test method creation process 400. As shown, the test method creation process 400 ends after block 420.

The disclosed test method creation process 400 allows for a user to quickly and easily set the parameters 232 (and/or parameter values) that define the way in which a test method will be conducted on a specimen 128 using a material testing machine 102, as well as the way in which the test results will be analyzed, without having to manually set each parameter 232 individually through a material testing workflow 300. Documentation may be further generated instructing an operator on how to use the newly generated and/or parameter 232 populated material testing workflow 300 to execute the test method and/or analyze the test results. Further, a tutorial may guide an operator through the use of the test method and/or workflow. As the inputs required from the user during the test method creation process 400 are far fewer (and/or simpler to understand) than if the user were to manually set each parameter 232 individually through the material testing workflow 300, there is a substantial saving in time, and a substantial simplification of the endeavor.

The present methods and/or systems may be realized in hardware, software, or a combination of hardware and software. The present methods and/or systems may be realized in a centralized fashion in at least one computing system, or in a distributed fashion where different elements are spread across several interconnected computing or cloud systems. Any kind of computing system or other apparatus adapted for carrying out the methods described herein is suited. A typical combination of hardware and software may be a general-purpose computing system with a program or other code that, when being loaded and executed, controls the computing system such that it carries out the methods described herein. Another typical implementation may comprise an application specific integrated circuit or chip. Some implementations may comprise a non-transitory machine-readable (e.g., computer readable) medium (e.g., FLASH drive, optical disk, magnetic storage disk, or the like) having stored thereon one or more lines of code executable by a machine, thereby causing the machine to perform processes as described herein.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. Therefore, it is intended that the present method and/or system not be limited to the particular implementations disclosed, but that the present method and/or system will include all implementations falling within the scope of the appended claims.

As used herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z".

As utilized herein, the terms "e.g.," and "for example" set off lists of one or more non-limiting examples, instances, or illustrations.

As used herein, the terms "coupled," "coupled to," and "coupled with," each mean a structural and/or electrical connection, whether attached, affixed, connected, joined, fastened, linked, and/or otherwise secured. As used herein, the term "attach" means to affix, couple, connect, join, fasten, link, and/or otherwise secure. As used herein, the term "connect" means to attach, affix, couple, join, fasten, link, and/or otherwise secure.

As used herein the terms "circuits" and "circuitry" refer to physical electronic components (i.e., hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, circuitry is "operable" and/or "configured" to perform a function whenever the circuitry comprises the necessary hardware and/or code (if any is necessary) to perform the function, regardless of whether performance of the function is disabled or enabled (e.g., by a user-configurable setting, factory trim, etc.).

As used herein, a control circuit may include digital and/or analog circuitry, discrete and/or integrated circuitry, microprocessors, DSPs, etc., software, hardware and/or firmware, located on one or more boards, that form part or all of a controller, and/or are used to control a welding process, and/or a device such as a power source or wire feeder.

As used herein, the term "processor" means processing devices, apparatus, programs, circuits, components, systems, and subsystems, whether implemented in hardware, tangibly embodied software, or both, and whether or not it is programmable. The term "processor" as used herein includes, but is not limited to, one or more computing devices, hardwired circuits, signal-modifying devices and systems, devices and machines for controlling systems, central processing units, programmable devices and systems, field-programmable gate arrays, application-specific integrated circuits, systems on a chip, systems comprising discrete elements and/or circuits, state machines, virtual machines, data processors, processing facilities, and combinations of any of the foregoing. The processor may be, for example, any type of general purpose microprocessor or microcontroller, a digital signal processing (DSP) processor, an application-specific integrated circuit (ASIC), a graphic processing unit (GPU), a reduced instruction set computer (RISC) processor with an advanced RISC machine (ARM) core, etc. The processor may be coupled to, and/or integrated with a memory device.

As used, herein, the term "memory" and/or "memory device" means computer hardware or circuitry to store information for use by a processor and/or other digital device. The memory and/or memory device can be any suitable type of computer memory or any other type of electronic storage medium, such as, for example, read-only memory (ROM), random access memory (RAM), cache memory, compact disc read-only memory (CDROM), electro-optical memory, magneto-optical memory, programmable read-only memory (PROM), erasable programmable read-only memory (EPROM), electrically-erasable programmable read-only memory (EEPROM), a computer-readable medium, or the like. Memory can include, for example, a non-transitory memory, a non-transitory processor readable medium, a non-transitory computer readable medium, non-volatile memory, dynamic RAM (DRAM), volatile memory, ferroelectric RAM (FRAM), first-in-first-out (FIFO) memory, last-in-first-out (LIFO) memory, stack memory, non-volatile RAM (NVRAM), static RAM (SRAM), a cache, a buffer, a semiconductor memory, a magnetic memory, an optical memory, a flash memory, a flash card, a compact flash card, memory cards, secure digital memory cards, a microcard, a minicard, an expansion card, a smart card, a memory stick, a multimedia card, a picture card, flash storage, a subscriber identity module (SIM) card, a hard drive (HDD), a solid state drive (SSD), etc. The memory can be configured to store code, instructions, applications, software, firmware and/or data, and may be external, internal, or both with respect to the processor.

Certain embodiments of the invention are described in the following clauses:
Clause 1. A material testing system, comprising:
   a material testing machine, comprising a test sensor, a test actuator, and a test controller configured to control the test actuator;
   a user interface configured to:
      output input prompts regarding (i) a sample specimen, (ii) a test method for testing the sample specimen using the material testing machine, or (iii) a result analysis of a test result of the test method, and
      receive one or more user inputs responding to the input prompts; and
   a computing device configured for communication with the user interface and the material testing machine, the computing device comprising processing circuitry configured to:
      identify one or more test parameters of the test method, one or more specimen parameters of the sample specimen, or one or more analysis parameters of the result analysis based on the one or more user inputs, and
      generate the test method, or a test method workflow, based on the one or more test, specimen, or analysis parameters, the test method workflow being configured to guide the user through setup or execution of (a) the test method or (b) the result analysis.
Clause 2. The system of clause 1, wherein the processing circuitry of the computing device is further configured to:
   generate a document that provides instructions on how to use the test method workflow, or how to setup, execute, or analyze the test result of the test method, based on the one or more user inputs, or the one or more test, specimen, or analysis parameters.
Clause 3. The system of clause 1, wherein the user interface is further configured to output one or more suggested user inputs, or one or more suggested parameters, the processing circuitry being configured to identify the one or more suggested user inputs, or the one or more suggested parameters, based on an analysis of one or more prior user inputs, or one or more prior parameters.
Clause 4. The system of clause 1, wherein the processing circuitry is further configured to:
   identify one or more additional parameters based on one or more prior test result of one or more prior test methods,
   wherein the test method, or the test method workflow, is generated using the one or more additional test parameters and the one or more test, specimen, or analysis parameters.
Clause 5. The system of clause 1, wherein the processing circuitry is further configured to communicate with the controller of the material testing machine to execute the test method on the sample specimen using the material testing machine.
Clause 6. The system of clause 5, wherein the computing device further comprises communication circuitry in communication with a network, the processing circuitry being further configured to:
   compile the test result of the test method; and
   provide the test result over the network to a network accessible interface, via the communication circuitry.
Clause 7. The system of clause 1, wherein the user interface is further configured to output a tutorial instructing, or providing access to a human or automated helper to provide guidance on, how to setup the material testing machine, operate the material testing machine, progress through the test method workflow, setup the test method, execute the test method, or perform the result analysis of the test result of the test method.
Clause 8. The system of clause 1, wherein the processing circuitry is further configured to:
   determine whether a change of a parameter, of the one or more test, specimen, or analysis parameters, would benefit the test method, or the test method workflow, and
   in response to determining the change of the parameter would benefit the test method, or the test method workflow, suggest the change of the parameter via the user interface, or implement the change of the parameter.
Clause 9. The system of clause 8, wherein determining whether the change of the parameter would benefit the test method, or the test method workflow, comprises determining whether the change of the parameter would save time or reduce a potential for error.
Clause 10. The system of clause 8, wherein determining whether the change of the parameter would benefit the test method, or the test method workflow, comprises determining whether the test method, the test method workflow, or each of the one or more test, specimen, or analysis parameters complies with a particular standard, the change of the parameter benefiting the test method, or the test method workflow, if the test method, the test method workflow, or each of the one or more test, specimen, or analysis parameters does not comply with the standard, the processing circuitry being further configured to identify the standard based on the one or more user inputs or the one or more test, specimen, or analysis parameters.
Clause 11. A method, comprising:
   outputting, via a user interface, input prompts regarding (i) a sample specimen, (ii) a test method for testing the sample specimen using a material testing machine, or (iii) a result analysis of a test result of the test method;
   receiving, via the user interface one or more user inputs responding to the input prompts;
   identifying, via processing circuitry of a computing device in communication with the user interface and material testing machine, one or more test parameters of the test method, one or more specimen parameters of the sample specimen, or one or more analysis parameters of the result analysis based on the one or more user inputs; and
   generating, via the processing circuitry, the test method, or a test method workflow, based on the one or more test, specimen, or analysis parameters, the test method workflow being configured to guide the user through setup or execution of (a) the test method or (b) the result analysis.
Clause 12. The method of clause 11, further comprising generating, via the processing circuitry, a document that provides instructions on how to use the test method workflow, or how to setup, execute, or analyze the test result of the test method, based on the one or more user inputs, or the one or more test, specimen, or analysis parameters.
Clause 13. The method of clause 11, further comprising:
   identifying, via the processing circuitry, one or more suggested user inputs, or one or more suggested parameters, based on an analysis of one or more prior user inputs, or one or more prior parameters; and
   outputting, via the user interface, the one or more suggested user inputs, or the one or more suggested parameters.
Clause 14. The method of clause 11, further comprising identifying one or more additional parameters based on one or more prior test result of one or more prior test methods, wherein the test method, or the test method workflow, is generated using the one or more additional test parameters and the one or more test, specimen, or analysis parameters.
Clause 15. The method of clause 11, further comprising communicating between the processing circuitry of the computing device and the controller of the material testing machine to execute the test method on the sample specimen using the material testing machine.
Clause 16. The method of clause 15, further comprising:
   compiling the test results of the test method via the processing circuitry of the computing device; and
   providing the test result over a network to a network accessible interface via communication circuitry of the computing device.
Clause 17. The method of clause 11, further comprising outputting, via the user interface, a tutorial instructing, or providing access to a human or automated helper to provide guidance on, how to setup the material testing machine, operate the material testing machine, progress through the test method workflow, setup the test method, execute the test method, or perform the result analysis of the test result of the test method.
Clause 18. The method of clause 11, further comprising:
   determining, via the processing circuitry, whether a change of a parameter, of the one or more test, specimen, or analysis parameters, would benefit the test method, or the test method workflow, and
   in response to determining the change of the parameter would benefit the test method, or the test method workflow, suggesting the change of the parameter via the user interface, or implementing the change of the parameter via the processing circuitry.
Clause 19. The method of clause 18, wherein determining whether the change of the parameter would benefit the test method, or the test method workflow, comprises determining whether the change of the parameter would save time or reduce a potential for error.
Clause 20. The method of clause 18, wherein determining whether the change of the parameter would benefit the test method, or the test method workflow, comprises determining whether the test method, the test method workflow, or each of the one or more test, specimen, or analysis parameters complies with a particular standard, the change of the parameter benefiting the test method, or the test method workflow, if the test method, the test method workflow, or each of the one or more test, specimen, or analysis parameters does not comply with the standard, the processing circuitry being further configured to identify the standard based on the one or more user inputs or the one or more test, specimen, or analysis parameters.

## Claims

1. A material testing system, comprising:
a material testing machine, comprising a test sensor, a test actuator, and a test controller configured to control the test actuator;
a user interface configured to:
output input prompts regarding (i) a sample specimen, (ii) a test method for testing the sample specimen using the material testing machine, or (iii) a result analysis of a test result of the test method, and
receive one or more user inputs responding to the input prompts; and
a computing device configured for communication with the user interface and the material testing machine, the computing device comprising processing circuitry configured to:
identify one or more test parameters of the test method, one or more specimen parameters of the sample specimen, or one or more analysis parameters of the result analysis based on the one or more user inputs, and
generate the test method, or a test method workflow, based on the one or more test, specimen, or analysis parameters, the test method workflow being configured to guide the user through setup or execution of (a) the test method or (b) the result analysis.

2. The system of claim 1, wherein the processing circuitry of the computing device is further configured to:
generate a document that provides instructions on how to use the test method workflow, or how to setup, execute, or analyze the test result of the test method, based on the one or more user inputs, or the one or more test, specimen, or analysis parameters.

3. The system of claim 1, wherein the user interface is further configured to output one or more suggested user inputs, or one or more suggested parameters, the processing circuitry being configured to identify the one or more suggested user inputs, or the one or more suggested parameters, based on an analysis of one or more prior user inputs, or one or more prior parameters.

4. The system of claim 1, wherein the processing circuitry is further configured to:
identify one or more additional parameters based on one or more prior test result of one or more prior test methods,
wherein the test method, or the test method workflow, is generated using the one or more additional test parameters and the one or more test, specimen, or analysis parameters.

5. The system of claim 1, wherein the processing circuitry is further configured to communicate with the controller of the material testing machine to execute the test method on the sample specimen using the material testing machine, and optionally
wherein the computing device further comprises communication circuitry in communication with a network, the processing circuitry being further configured to:
compile the test result of the test method; and
provide the test result over the network to a network accessible interface, via the communication circuitry.

6. The system of claim 1, wherein the user interface is further configured to output a tutorial instructing, or providing access to a human or automated helper to provide guidance on, how to setup the material testing machine, operate the material testing machine, progress through the test method workflow, setup the test method, execute the test method, or perform the result analysis of the test result of the test method.

7. The system of claim 1, wherein the processing circuitry is further configured to:
determine whether a change of a parameter, of the one or more test, specimen, or analysis parameters, would benefit the test method, or the test method workflow, and
in response to determining the change of the parameter would benefit the test method, or the test method workflow, suggest the change of the parameter via the user interface, or implement the change of the parameter.

8. The system of claim 7, wherein determining whether the change of the parameter would benefit the test method, or the test method workflow, comprises determining whether the change of the parameter would save time or reduce a potential for error, or
wherein determining whether the change of the parameter would benefit the test method, or the test method workflow, comprises determining whether the test method, the test method workflow, or each of the one or more test, specimen, or analysis parameters complies with a particular standard, the change of the parameter benefiting the test method, or the test method workflow, if the test method, the test method workflow, or each of the one or more test, specimen, or analysis parameters does not comply with the standard, the processing circuitry being further configured to identify the standard based on the one or more user inputs or the one or more test, specimen, or analysis parameters.

9. A method, comprising:
outputting, via a user interface, input prompts regarding (i) a sample specimen, (ii) a test method for testing the sample specimen using a material testing machine, or (iii) a result analysis of a test result of the test method;
receiving, via the user interface one or more user inputs responding to the input prompts;
identifying, via processing circuitry of a computing device in communication with the user interface and material testing machine, one or more test parameters of the test method, one or more specimen parameters of the sample specimen, or one or more analysis parameters of the result analysis based on the one or more user inputs; and
generating, via the processing circuitry, the test method, or a test method workflow, based on the one or more test, specimen, or analysis parameters, the test method workflow being configured to guide the user through setup or execution of (a) the test method or (b) the result analysis.

10. The method of claim 1, further comprising generating, via the processing circuitry, a document that provides instructions on how to use the test method workflow, or how to setup, execute, or analyze the test result of the test method, based on the one or more user inputs, or the one or more test, specimen, or analysis parameters.

11. The method of claim 1, further comprising:
identifying, via the processing circuitry, one or more suggested user inputs, or one or more suggested parameters, based on an analysis of one or more prior user inputs, or one or more prior parameters; and
outputting, via the user interface, the one or more suggested user inputs, or the one or more suggested parameters,
or wherein the method further comprises identifying one or more additional parameters based on one or more prior test result of one or more prior test methods, wherein the test method, or the test method workflow, is generated using the one or more additional test parameters and the one or more test, specimen, or analysis parameters.

12. The method of claim 9, further comprising communicating between the processing circuitry of the computing device and the controller of the material testing machine to execute the test method on the sample specimen using the material testing machine, and optionally the method further comprising:
compiling the test results of the test method via the processing circuitry of the computing device; and
providing the test result over a network to a network accessible interface via communication circuitry of the computing device.

13. The method of claim 9, further comprising outputting, via the user interface, a tutorial instructing, or providing access to a human or automated helper to provide guidance on, how to setup the material testing machine, operate the material testing machine, progress through the test method workflow, setup the test method, execute the test method, or perform the result analysis of the test result of the test method.

14. The method of claim 9, further comprising:
determining, via the processing circuitry, whether a change of a parameter, of the one or more test, specimen, or analysis parameters, would benefit the test method, or the test method workflow, and
in response to determining the change of the parameter would benefit the test method, or the test method workflow, suggesting the change of the parameter via the user interface, or implementing the change of the parameter via the processing circuitry.

15. The method of claim 14, wherein determining whether the change of the parameter would benefit the test method, or the test method workflow, comprises determining whether the change of the parameter would save time or reduce a potential for error,
or wherein determining whether the change of the parameter would benefit the test method, or the test method workflow, comprises determining whether the test method, the test method workflow, or each of the one or more test, specimen, or analysis parameters complies with a particular standard, the change of the parameter benefiting the test method, or the test method workflow, if the test method, the test method workflow, or each of the one or more test, specimen, or analysis parameters does not comply with the standard, the processing circuitry being further configured to identify the standard based on the one or more user inputs or the one or more test, specimen, or analysis parameters.
